# EUROPEAN PATENT APPLICATION

(11) **EP 4 614 788 A1**
(43) Date of publication of application: **10.09.2025**
(21) Application number: 23898377.9
(22) Date of filing: 01.12.2023
(51) Int. Cl.: H02M 3/157, H02M 3/158, H02M 1/00, H02M 1/08, G06F 1/26

(54) **ELECTRONIC DEVICE FOR CONTROLLING DC/DC CONVERTER AND METHOD FOR OPERATING SAME**

(30) Priority: 01.12.2022 KR 20220165314; 13.01.2023 KR 20230005150
(71) Applicant: Samsung Electronics Co., Ltd., Suwon-si, Gyeonggi-do 16677 (KR)
(72) Inventor: NOH, Seungduck, Suwon-si Gyeonggi-do 16677 (KR); PARK, Minsu, Suwon-si Gyeonggi-do 16677 (KR)
(74) Representative: Nederlandsch Octrooibureau
(86) International application number: PCT/KR2023/019664
(87) International publication number: WO 2024/117854

(57) **Abstract**

An electronic device (101), according to one embodiment, may comprise: a DC/DC converter (330) including an inductor and a first switch (S1) and a second switch (S2) connected to each other; and a control circuit (320) operatively coupled to the DC/DC converter. According to one embodiment, one end of the first switch may be connected to a power source, the other end of the first switch may be connected to one end of the second switch, and the other end of the second switch may be connected to ground. The control circuit according to one embodiment may be set to: determine a peak value of current applied to the inductor from one end of the first switch; determine a valley value of the current applied to the inductor from the other end of the second switch; control the first switch and the second switch such that the peak value of the current applied to the inductor is not greater than a current value corresponding to a difference between the output voltage of the DC/DC converter and a first reference voltage; and if, while controlling the first switch and the second switch such that the peak value of the current applied to the inductor is not greater than the current value, determining that the output voltage of the DC/DC converter is less than a threshold voltage, control the first switch and the second switch such that the valley value of the current applied to the inductor is not less than the current value. Various other embodiments may be applied.

## Description

### [Technical Field]

Various embodiments of the disclosure relate to an electronic device for controlling a DC/DC converter and a method of operating the same.

### [Background Art]

A buck converter may include an inductor and a plurality of switches. In this case, when an excessive current is conducted through the inductor, heat generation or damage to a circuit may occur. Accordingly, an electronic device may control the magnitude of a current conducted through the inductor included in the buck converter so that the magnitude is not greater than a current value corresponding to a difference between an output voltage and a reference voltage.

If a momentary load transition of the electronic device occurs, an output voltage of the buck converter may rapidly decrease. In this case, if a normal voltage cannot be supplied to a system, the performance of the system may deteriorate. However, when the magnitude of the current conducted through the inductor included in the buck converter is limited, the current supplied to the system through the buck converter may be limited, and thus a rapidly decreased voltage cannot be quickly recovered.

### [Detailed Description of the Invention]

### [Technical Solution]

An electronic device 101 according to an embodiment may include a DC/DC converter 330 including an inductor and a first switch (S1) and a second switch (S2) which are connected to each other, and a control circuit 320 operatively connected to the DC/DC converter. One end of the first switch according to an embodiment may be connected to a power source, the other end of the first switch may be connected to one end of the second switch, and the other end of the second switch may be connected to ground. The control circuit according to an embodiment may be configured to identify a peak value of a current conducted through the inductor at the one end of the first switch. The control circuit according to an embodiment may be configured to identify a valley value of the current conducted through the inductor at the other end of the second switch. The control circuit according to an embodiment may be configured to control the first switch and the second switch so that the peak value of the current conducted through the inductor is not greater than a current value corresponding to a difference between an output voltage of the DC/DC converter and a first reference voltage. The control circuit according to an embodiment may be configured to, when identifying that the output voltage of the DC/DC converter is lower than a threshold voltage while controlling the first switch and the second switch so that the peak value of the current conducted through the inductor is not greater than the current value, control the first switch and the second switch so that the valley value of the current conducted through the inductor is not less than the current value.

A method of operating an electronic device 101 including a DC/DC converter 330 according to an embodiment may include an operation of identifying a peak value of a current conducted through an inductor included in the DC/DC converter at one end of a first switch (S1) included in the DC/DC converter. The method of operating the electronic device according to an embodiment may include an operation of identifying a valley value of the current conducted through the inductor at the other end of a second switch (S2) included in the DC/DC converter. The one end of the first switch according to an embodiment may be connected to a power source, the other end of the first switch may be connected to one end of the second switch, and the other end of the second switch may be connected to ground. The method of operating the electronic device according to an embodiment may include an operation of controlling the first switch and the second switch so that the peak value of the current conducted through the inductor is not greater than a current value corresponding to a difference between an output voltage of the DC/DC converter and a first reference voltage. The method of operating the electronic device according to an embodiment may include an operation of, when identifying that the output voltage of the DC/DC converter is lower than a threshold voltage while controlling the first switch and the second switch so that the peak value of the current conducted through the inductor is not greater than the current value, controlling the first switch and the second switch so that the valley value of the current conducted through the inductor is not less than the current value.

### [Brief Description of Drawings]

FIG. 1 is a block diagram of an electronic device in a network environment according to various embodiments.
FIG. 2A is a diagram illustrating a buck converter and a control circuit for controlling the same according to a comparative embodiment.
FIG. 2B is a graph illustrating a current conducted through an inductor included in a buck converter and an output voltage of the buck converter according to a comparative embodiment.
FIG. 3A is a diagram illustrating a buck converter and a control circuit for controlling the same according to an embodiment.
FIG. 3B is a diagram for explaining a method for identifying a peak value and a valley value of a current conducted through an inductor included in a buck converter by sensing circuits according to an embodiment.
FIG. 4 is a flowchart for explaining an operation of controlling a current conducted through an inductor included in a buck converter by a control circuit according to an embodiment.
FIG. 5 is a flowchart for explaining an operation of controlling a current conducted through an inductor included in a buck converter by a control circuit according to an embodiment.
FIG. 6 is a circuit diagram illustrating a buck converter and a control circuit for controlling the same according to an embodiment.
FIG. 7 is a circuit diagram illustrating a buck converter and a control circuit for controlling the same according to an embodiment.
FIG. 8 is a table for explaining an operation of a control circuit for controlling a buck converter according to an embodiment.
FIGS. 9A and 9B are flowcharts for explaining a method for controlling two switches included in a buck converter by a control circuit according to an embodiment.
FIGS. 10A and 10B are graphs illustrating a method for controlling two switches included in a buck converter according to an embodiment.
FIG. 11A is a graph illustrating a current conducted through an inductor and an output voltage of a buck converter according to an embodiment.
FIG. 11B is a graph illustrating a current conducted through an inductor and an output voltage of a buck converter according to an embodiment.
FIG. 12 is a graph illustrating an effect of, when an output voltage of a buck converter decreases, supplying more current to increase the output voltage according to an embodiment.

### [Mode for Carrying out the Invention]

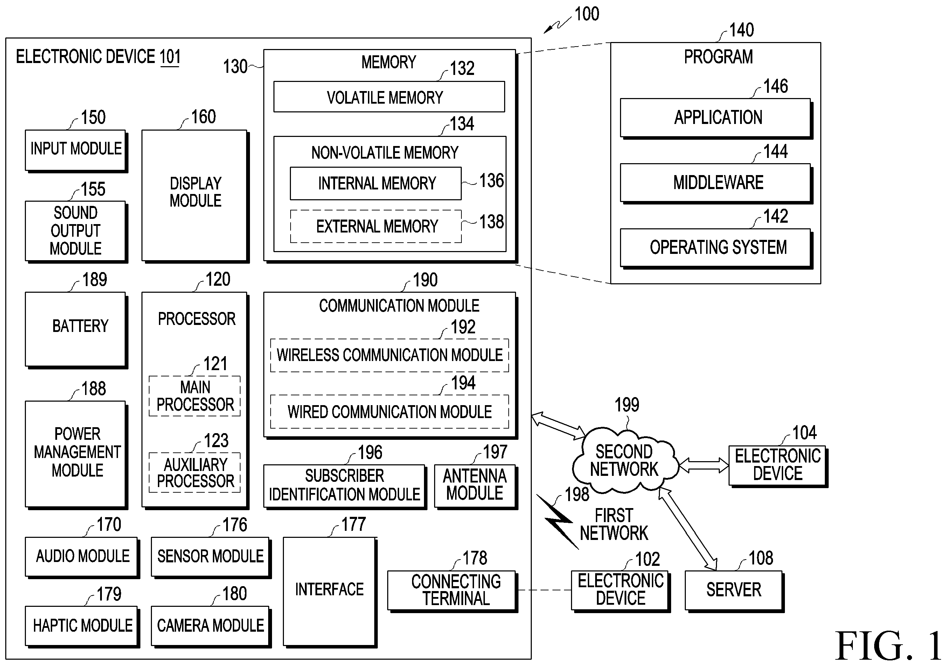

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

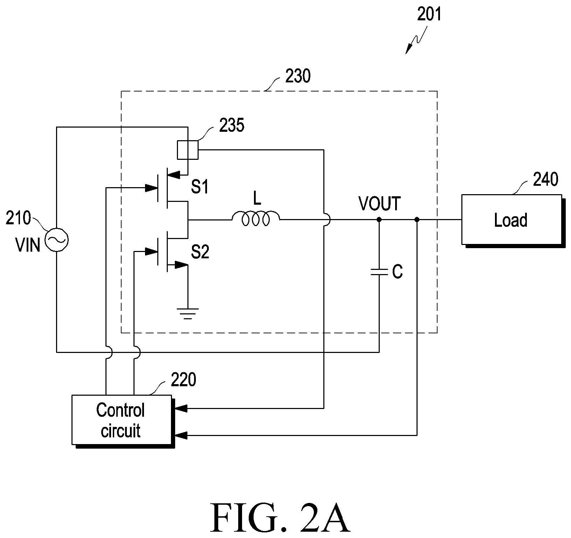

FIG. 2A is a diagram illustrating a buck converter and a control circuit for controlling the same according to a comparative embodiment.

Referring to FIG. 2A, according to a comparative embodiment, an electronic device 201 may include an input power source 210, a control circuit 220, a buck converter 230, and a load 240.

According to an embodiment, the buck converter 230 may generate an output voltage (VOUT), based on an input voltage (VIN) applied from the input power source 210 according to the control of the control circuit 220, and apply the output voltage (VOUT) to the load 240. For example, the buck converter 230 may include a first switch (S1), a second switch (S2), an inductor (L), and a capacitor (C). For example, the load 240 may refer to various types of elements that are included in the electronic device 201 and require power.

According to an embodiment, the control circuit 220 may identify a peak value of a current conducted through the inductor (L) included in the buck converter 230. For example, the control circuit 220 may identify the peak value of the current conducted through the inductor (L) through a sensing circuit 235 included in the buck converter 230. For example, the sensing circuit 235 may be disposed at a position corresponding to a drain of the first switch (S1) included in the buck converter 230. For example, the sensing circuit 235 may sense a current according to various manners (e.g., a current mirror manner, an r-sensing manner, or a DC resistance (DCR) current sensing manner).

According to an embodiment, the control circuit 220 may control the first switch (S1) and the second switch (S2) (e.g., control turning on/off of the first switch (S1) and the second switch (S2)) so that the peak value of the current conducted through the inductor (L) is not greater than a current value (e.g., a specified value (Error) related to a current configuration for limiting a peak value of an inductor current (IL)) corresponding to a difference between the output voltage (VOUT) and a reference voltage.

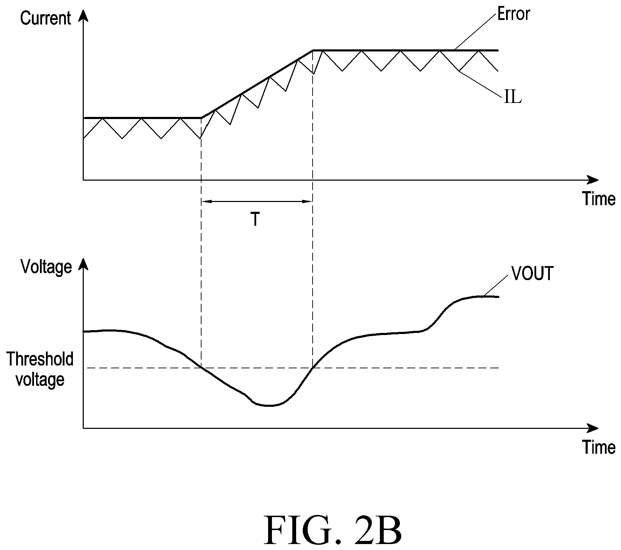

FIG. 2B is a graph illustrating a current conducted through an inductor included in a buck converter and an output voltage of the buck converter according to a comparative embodiment.

Referring to FIG. 2A, according to a comparative embodiment, a control circuit (e.g., the control circuit 220 of FIG. 2A) may control the first switch (S1) and the second switch (S2) included in a buck converter (e.g., the buck converter 230 of FIG. 2A) so that a peak value of a current (IL) conducted through the inductor (L) is not greater than a current value (e.g., a specified value (Error) related to a current configuration for limiting a peak value of an inductor current (IL)) corresponding to a difference between an output voltage (VOUT) and a reference voltage.

According to the comparative example, when a momentary load transient occurs in the electronic device 201, the output voltage (VOUT) of the buck converter may rapidly decrease. In this case, the output voltage (VOUT) may decrease below a threshold voltage. If the electronic device 201 fails to supply a normal voltage to the load 240 through the buck converter 230, performance degradation may occur.

However, the peak value of the current (IL) conducted through the inductor (L) may be limited by the control circuit 220, and the magnitude of the current supplied to the load 240 through the buck converter 230 may be limited. That is, the control circuit 220 cannot quickly increase the output voltage (VOUT) of the buck converter 230 in an interval (T) in which the output voltage (VOUT) of the buck converter has rapidly decreased to or below the threshold voltage, due to an operation of limiting the peak value of the current (IL) conducted through the inductor (L). Accordingly, the performance of the electronic device 201 may be degraded. For example, the threshold voltage may be a voltage value configured for current control so that an electronic device of the electronic device 201 operates stably.

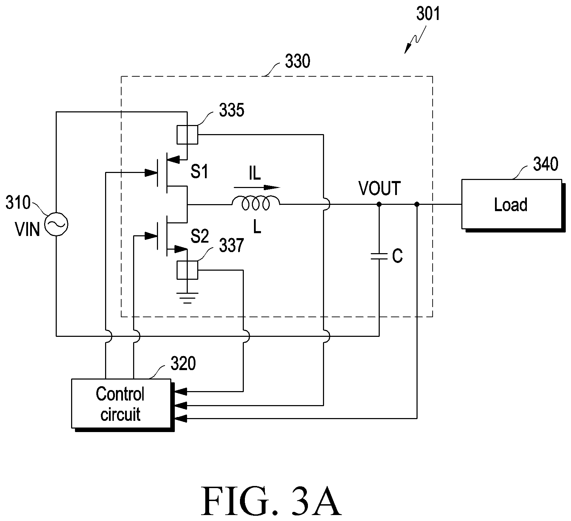

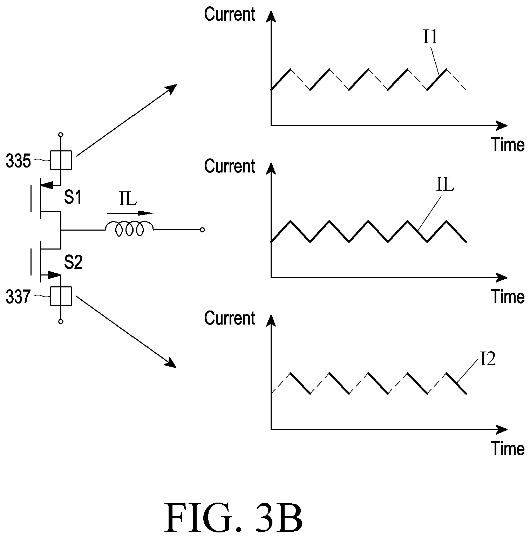

An electronic device (e.g., an electronic device 301 of FIG. 3) according to various embodiments of the disclosure described below may, when an output voltage of a buck converter rapidly decreases while controlling a peak value of a current conducted through an inductor included in the buck converter to a specified value or less, control a valley value of the current conducted through the inductor to the specified value (e.g., Error) or higher. Accordingly, when the output voltage of the buck converter rapidly decreases, the electronic device according to various embodiments of the disclosure may quickly increase the output voltage of the buck converter by not limiting the peak value of the current conducted through the inductor. In addition, the electronic device according to various embodiments of the disclosure may reduce the occurrence of performance degradation even when the output voltage of the buck converter rapidly decreases.

FIG. 3A is a diagram illustrating a buck converter and a control circuit for controlling the same according to an embodiment.

Referring to FIG. 3A, according to an embodiment, an electronic device 301 may include an input power source 310, a control circuit 320, a buck converter 330, and a load 340.

According to an embodiment, the buck converter 330 may generate an output voltage (VOUT), based on an input voltage (VIN) applied from the input power source 310 according to the control of the control circuit 320, and apply the output voltage (VOUT) to the load 340.

According to an embodiment, the input power source 310 may apply the input voltage (VIN) to the buck converter 330. For example, the input power source 310 may be implemented as a battery (not shown) included in the electronic device 301 or a power source external to the electronic device 301.

According to an embodiment, the load 340 may refer to various types of elements that are included in the electronic device 301 and require power. When a transient of the load 340 occurs, the output voltage (VOUT) of the buck converter 340 may momentarily decrease. For example, the transient of the load 340 may occur when a specific application (e.g., a game application, a video application, or an audio application) that momentarily requires a large amount of power or current is executed.

According to an embodiment, the buck converter 330 may include a first switch (S1), a second switch (S2), an inductor (L), and a capacitor (C). The buck converter 330 may further include a first sensing circuit 335 and a second sensing circuit 337.

According to an embodiment, the first switch (S1) may be implemented as a P-type field effect transistor (FET), and the second switch (S2) may be implemented as an N-type FET. The first switch (S1) and the second switch (S2) may be connected to each other. For example, a drain of the first switch (S1) may be connected to the input power source 310. A source of the first switch (S1) may be connected to a drain of the second switch (S2). A source of the second switch (S2) may be connected to the ground. Each of the source of the first switch (S1) and the drain of the second switch (S2) may be connected to the inductor (L). The first switch (S1) and the second switch (S2) may be alternately turned on/off according to the control of the control circuit 320. Accordingly, an inductor current (IL) may be conducted through the inductor (L). For example, the inductor current (IL) may refer to a current provided to the inductor (L) through the first switch (S1) and/or the second switch (S2). As the inductor current (IL) is supplied to the capacitor (C), the output voltage (VOUT) may be generated.

According to an embodiment, the first sensing circuit 335 may identify or sense a peak value of the inductor current (IL) at a point corresponding to the drain of the first switch (S1). For example, the peak value of the inductor current (IL) may refer to the highest current value of the inductor current (IL) conducted through the inductor (L) in one switching cycle of the first switch (S1) and the second switch (S2). For example, the first sensing circuit 335 may identify or sense the peak value of the inductor current (IL) according to various manners (e.g., a current mirror manner, an r-sensing manner, or a DC resistance (DCR) current sensing manner). For example, the first sensing circuit 335 may be disposed at the point corresponding to the drain of the first switch (S1). The first sensing circuit 335 may provide information on the identified or sensed peak value of the inductor current (IL) to the control circuit 320.

According to an embodiment, the second sensing circuit 337 may identify or sense a valley value of the inductor current (IL) at a point corresponding to the source of the second switch (S2). For example, the valley value of the inductor current (IL) may refer to the lowest current value of the inductor current (IL) conducted through the inductor (L) in one switching cycle of the first switch (S1) and the second switch (S2). For example, the second sensing circuit 337 may identify or sense the valley value of the inductor current (IL) according to various manners (e.g., a current mirror manner, an r-sensing manner, or a DC resistance (DCR) current sensing manner). For example, the second sensing circuit 337 may be disposed at the point corresponding to the source of the second switch (S2). The second sensing circuit 337 may provide information on the identified or sensed valley value of the inductor current (IL) to the control circuit 320.

According to an embodiment, the buck converter 330 may further include a sensing circuit (not shown) electrically connected to the inductor (L) to identify or sense a peak or valley value of a current flowing through the inductor (L).

According to an embodiment, the control circuit 320 may identify the peak value and valley value of the inductor current (IL). The control circuit 320 may also identify the output voltage (VOUT) of the buck converter 330. The control circuit 320 may control turning on/off of the first switch (S1) and the second switch (S2), based on the output voltage (VOUT) of the buck converter 330, the peak value of the inductor current (IL), and the valley value of the inductor current (IL). For example, the control circuit 320 may adjust a duty ratio of the first switch (S1) and the second switch (S2). For example, the control circuit 320 may be implemented as an analog circuit or a digital circuit (e.g., a micro controller unit (MCU)).

According to an embodiment, the control circuit 320 may control the first switch (S1) and the second switch (S2) so that the peak value of the inductor current (IL) is not greater than a specified value when the output voltage (VOUT) of the buck converter 330 is not lower than a threshold voltage. For example, the threshold voltage may be a pre-specified voltage value. For example, the threshold voltage may be determined as a voltage value at which performance degradation of the electronic device 301 may occur. For example, the specified value may be a current value corresponding to a difference between the output voltage (VOUT) and a reference voltage. The specified value may be changed as the magnitude of the output voltage (VOUT) is changed. For example, the specified value may be changed for each switching cycle of the first switch (S1) and the second switch (S2).

According to an embodiment, the control circuit 320 may control the first switch (S1) and the second switch (S2) so that the valley value of the inductor current (IL) is not less than a specified value (e.g., a current value corresponding to a difference between the output voltage (VOUT) and a reference voltage) when the output voltage (VOUT) of the buck converter 330 is lower than the threshold voltage. Thereafter, when the output voltage (VOUT) of the buck converter 330 becomes higher than the threshold voltage, the control circuit 320 may control the first switch (S1) and the second switch (S2) so that the peak value of the inductor current (IL) is not greater than the specified value.

According to the above-described method, the control circuit 320 may not limit the peak value of the inductor current (IL) by a specified value (e.g., Error) related to a current configuration when the output voltage (VOUT) of the buck converter 330 rapidly becomes lower than the threshold voltage while limiting the peak value of the inductor current (IL) conducted through the inductor (L) included in the buck converter 330 to the specified value or less. In addition, the control circuit 320 may control the valley value of the inductor current (IL) to be greater than or equal to the specified value. Accordingly, when the output voltage (VOUT) of the buck converter 330 rapidly becomes lower than the threshold voltage, the control circuit 220 may supply more current to the buck converter 330 to quickly increase the output voltage (VOUT) of the buck converter 330. When the output voltage (VOUT) of the buck converter 330 rapidly decreases, the control circuit 320 may quickly increase the output voltage (VOUT) of the buck converter 330 so as to improve the performance of the electronic device 301.

According to an embodiment, the control circuit 320 may identify the valley value of the inductor current (IL) by using a sensing circuit (e.g., the second sensing circuit 337). The control circuit 320 may control the valley value of the inductor current (IL) to be greater than or equal to the specified value (e.g., Error) related to the current configuration.

Meanwhile, the above-described control operation may also be applied to various types of DC/DC converters other than the buck converter 330. For example, the above-described control operation may also be applied to other types of converters or boosters other than the buck converter 330.

FIG. 3B is a diagram for explaining a method for identifying a peak value and a valley value of a current conducted through an inductor included in a buck converter by sensing circuits according to an embodiment.

Referring to FIG. 3B, according to an embodiment, a control circuit (e.g., the control circuit 320 of FIG. 3) may alternately turn on/off the first switch (S1) and the second switch (S2) in one switching cycle of the first switch (S1) and the second switch (S2). For example, when the first switch (S1) is turned on and the second switch (S2) is turned off, an inductor current (IL) may increase. When the first switch (S1) is turned off and the second switch (S2) is turned on, the inductor current (IL) may decrease.

According to an embodiment, the first sensing circuit 335 may sense a first current (I1) corresponding to an increasing portion of the inductor current (IL). The first sensing circuit 335 may identify a peak value of the inductor current (IL) in one switching cycle, based on the first current (I1). For example, the first sensing circuit 335 may sense or identify a current conducted at the point corresponding to the drain of the first switch (S1) in order to sense the increasing portion of the inductor current (IL). Alternatively, the first sensing circuit 335 may be disposed at the point corresponding to the drain of the first switch (S1) in order to sense the increasing portion of the inductor current (IL).

According to an embodiment, the second sensing circuit 337 may sense a second current (I2) corresponding to a decreasing portion of the inductor current (IL). The second sensing circuit 337 may identify a valley value of the inductor current (IL) in one switching cycle, based on the second current (I2). For example, the second sensing circuit 337 may sense or identify a current conducted at the point corresponding to the source of the second switch (S2) in order to sense the decreasing portion of the inductor current (IL). Alternatively, the second sensing circuit 337 may be disposed at the point corresponding to the source of the second switch (S2) in order to sense the decreasing portion of the inductor current (IL).

According to an embodiment, the buck converter 330 may further include a sensing circuit (not shown) electrically connected to the inductor (L) in order to identify or sense a peak or valley value of a current flowing through the inductor (L).

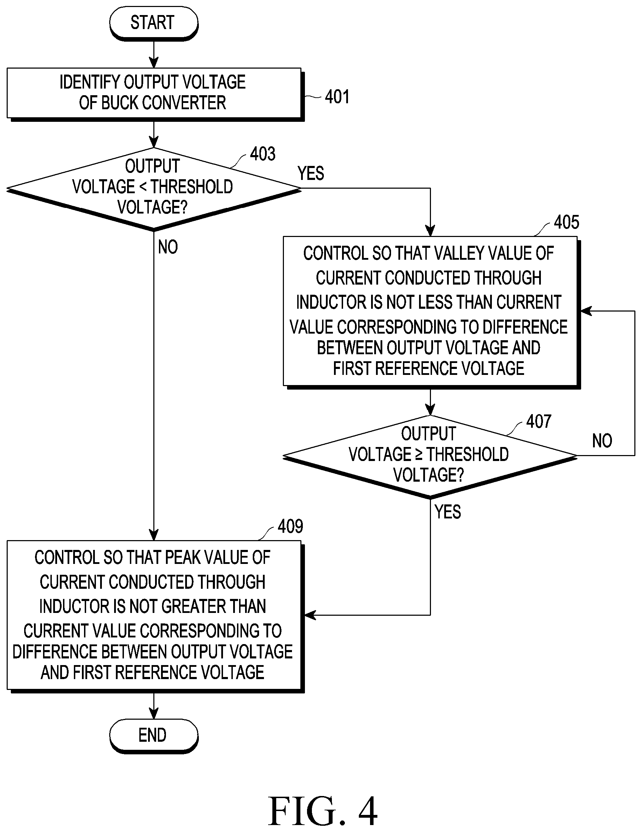

FIG. 4 is a flowchart for explaining an operation of controlling a current conducted through an inductor included in a buck converter by a control circuit according to an embodiment.

Referring to FIG. 4, according to an embodiment, in operation 401, a control circuit (e.g., the control circuit 320 of FIG. 3A) may identify an output voltage (VOUT) of a buck converter (the buck converter 330 of FIG. 3A).

According to an embodiment, in operation 403, the control circuit 320 may identify whether the output voltage (VOUT) is lower than a threshold voltage.

According to an embodiment, if it is identified that the output voltage (VOUT) is not lower than the threshold voltage (NO in operation 403), in operation 409, the control circuit 320 may control switches (S1 and S2) included in the buck converter 330 so that a peak value of a current (e.g., an inductor current (IL)) conducted through the inductor (L) included in the buck converter 330 is not greater than a current value corresponding to a difference between the output voltage and a first reference voltage. For example, the first reference voltage may refer to a voltage specified to control a peak value or valley value of the current conducted through the inductor (L). For example, the first reference voltage may be pre-specified by the control circuit 220 or by a user.

According to an embodiment, if it is identified that the output voltage (VOUT) is lower than the threshold voltage (Yes in operation 403), in operation 405, the control circuit 320 may control the switches (S1 and S2) included in the buck converter 330 so that a valley value of the current (e.g., the inductor current (IL)) conducted through the inductor (L) is not less than the current value (or a configured current value) corresponding to the difference between the output voltage (VOUT) and the first reference voltage. According to an embodiment, the current value (or the configured current value) may be a current value configured to correspond to the valley value of the current conducted through the inductor (L). For example, the control circuit 320 may control the switches (S1 and S2) included in the buck converter 330 so that the valley value of the current conducted through the inductor (L) becomes greater than or equal to the current value (or the configured current value). The control circuit 320 may control the switches (S1 and S2) included in the buck converter 330 so that the peak value of the current conducted through the inductor (L) is greater than the current value (or the configured current value). According to an embodiment, when the output voltage (VOUT) is lower than the first reference voltage, a slope at which the configured current value increases may be determined based on the difference between the output voltage (VOUT) and the first reference voltage. Conversely, when the output voltage (VOUT) is greater than the first reference voltage, a slope at which the configured current value is constant or decreases may be determined based on the difference between the output voltage (VOUT) and the first reference voltage. However, the technical idea of the disclosure may not be limited thereto.

According to an embodiment, in operation 407, the control circuit 220 may identify whether the output voltage (VOUT) of the buck converter 330 is greater than or equal to the threshold voltage.

According to an embodiment, if it is identified that the output voltage (VOUT) of the buck converter 330 is not greater than or equal to the threshold voltage (NO in operation 407), the control circuit 320 may control the switches (S1 and S2) included in the buck converter 330 so that the valley value of the current (e.g., the inductor current (IL)) conducted through the inductor (L) is not less than the current value corresponding to the difference between the output voltage and the first reference voltage.

According to an embodiment, if it is identified that the output voltage (VOUT) of the buck converter 330 is greater than or equal to the threshold voltage (Yes in operation 407), in operation 409, the control circuit 320 may control the switches (S1 and S2) included in the buck converter 330 so that the peak value of the current (e.g., the inductor current (IL)) conducted through the inductor (L) included in the buck converter 330 is not greater than the current value corresponding to the difference between the output voltage and the first reference voltage.

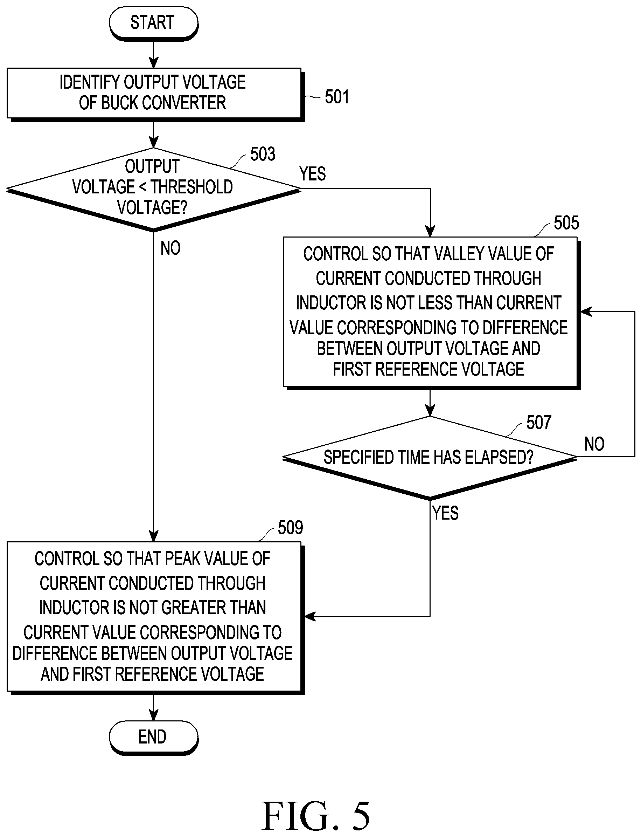

FIG. 5 is a flowchart for explaining an operation of controlling a current conducted through an inductor included in a buck converter by a control circuit according to an embodiment.

In operation 501, a control circuit (e.g., the control circuit 320 of FIG. 3A) may identify an output voltage (VOUT) of a buck converter (the buck converter 330 of FIG. 3A).

According to an embodiment, in operation 503, the control circuit 320 may identify whether the output voltage (VOUT) is lower than a threshold voltage.

According to an embodiment, if it is identified that the output voltage (VOUT) is not lower than the threshold voltage (NO in operation 503), in operation 509, the control circuit 320 may control switches (S1 and S2) included in the buck converter 330 so that a peak value of a current (e.g., an inductor current (IL)) conducted through the inductor (L) included in the buck converter 330 is not greater than a current value corresponding to a difference between the output voltage and a first reference voltage.

According to an embodiment, if it is identified that the output voltage (VOUT) is lower than the threshold voltage (Yes in operation 503), in operation 505, the control circuit 320 may control the switches (S1 and S2) included in the buck converter 330 so that a valley value of the current (e.g., the inductor current (IL)) conducted through the inductor (L) is not less than the current value corresponding to the difference between the output voltage (VOUT) and the first reference voltage.

According to an embodiment, in operation 507, the control circuit 220 may identify whether the switches (S1 and S2) have been controlled so that the valley value of the current conducted through the inductor (L) is not less than the current value corresponding to the difference between the output voltage (VOUT) and the first reference voltage for a specified time. For example, the control circuit 220 may identify whether the specified time has elapsed from the time when the control is started. For example, the specified time may refer to a time during which the rapidly decreased output voltage (VOUT) can be increased or recovered again. The specified time may be pre-specified by the control circuit 220 or by a user.

According to an embodiment, if it is identified that the specified time has not elapsed from the time when the control of operation 505 is started (No in operation 507), the control circuit 320 may control the switches (S1 and S2) included in the buck converter 330 so that the valley value of the current (e.g., the inductor current (IL)) conducted through the inductor (L) is not less than the current value corresponding to the difference between the output voltage and the first reference voltage.

According to an embodiment, if it is identified that the specified time has elapsed from the time when the control of operation 505 is started (Yes in operation 507), in operation 509, the control circuit 320 may control the switches (S1 and S2) included in the buck converter 330 so that the peak value of the current (e.g., the inductor current (IL)) conducted through the inductor (L) included in the buck converter 330 is not greater than the current value corresponding to the difference between the output voltage and the first reference voltage.

According to the method described in FIGS. 4 and 5 above, when the output voltage (VOUT) of the buck converter 330 rapidly becomes lower than the threshold voltage while limiting the peak value of the inductor current (IL) conducted through the inductor (L) included in the buck converter 330 to a specified value or less, the control circuit 320 may not limit the peak value of the inductor current (IL). In addition, the control circuit 320 may control the valley value of the inductor current (IL) to be greater than or equal to the specified value. Accordingly, the control circuit 220 may limit the peak value of the inductor current (IL) to ensure stability when the output voltage (VOUT) is higher than the threshold voltage, and may temporarily supply more current to the buck converter 330 so as to minimize performance degradation when the output voltage (VOUT) becomes lower than the threshold voltage.

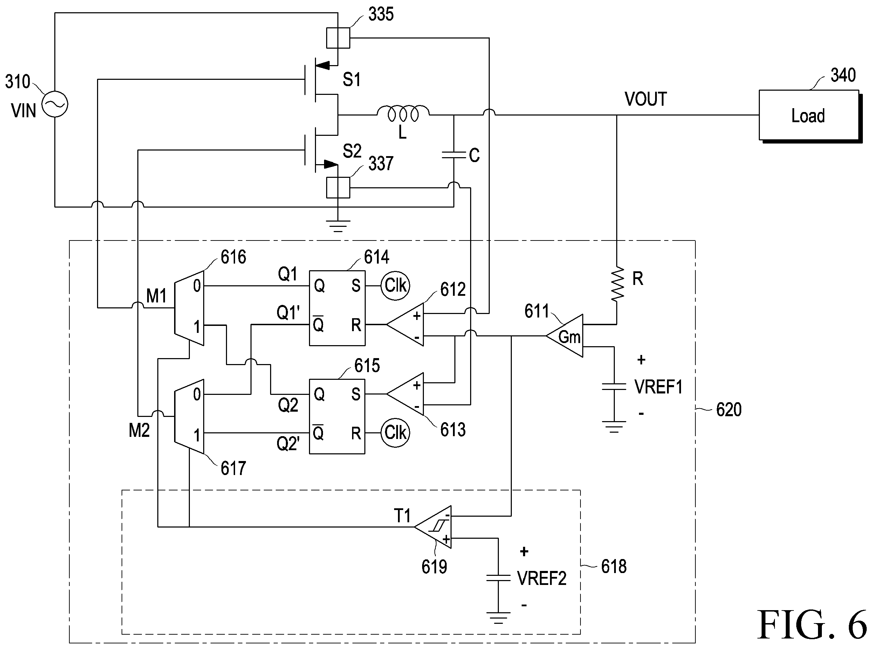

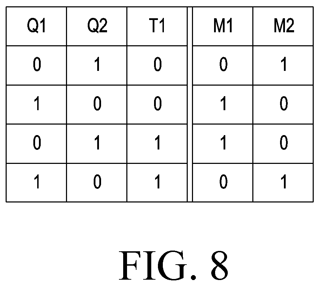

FIG. 6 is a circuit diagram illustrating a buck converter and a control circuit for controlling the same according to an embodiment. FIG. 8 is a table for explaining an operation of a control circuit for controlling a buck converter according to an embodiment.

Referring to FIG. 6, according to an embodiment, a control circuit 620 may perform the same or similar function as the control circuit 320 of FIG. 3. Meanwhile, the configurations of the control circuit 620 described in FIG. 6 are an example for performing the above-described control operation, and the technical idea of the disclosure may not be limited thereto.

According to an embodiment, the control circuit 620 may include a first comparator 611, a second comparator 612, a third comparator 613, a first flip-flop 614, a second flip-flop 615, multiplexers 616 and 617, and a comparison circuit 618.

According to an embodiment, the first comparator 611 may output a signal indicating a current value, based on a difference between an output voltage (VOUT) of a buck converter (e.g., the buck converter 330 of FIG. 3A) and a first reference voltage (VREF1). For example, the first comparator 611 may receive an input of voltage signals and output a comparison result as a current signal.

According to an embodiment, the second comparator 612 may output a first signal to a first input terminal (R) of the first flip-flop 614, based on the signal indicating the current value, which is output from the first comparator 611, and a peak value of an inductor current (IL). For example, the second comparator 612 may output the first signal of a low level (e.g., "0") if the peak value of the inductor current (IL) is not greater than a current value output from the first comparator 611. The second comparator 612 may output the first signal of a high level (e.g., "1") if the peak value of the inductor current (IL) is greater than the current value output from the first comparator 611.

According to an embodiment, the third comparator 613 may output a second signal to a second input terminal (S) of the second flip-flop 615, based on the signal indicating the current value, which is output from the first comparator 611, and a valley value of the inductor current (IL). For example, the second comparator 612 may output the second signal of a low level (e.g., "0") if the current value output from the first comparator 611 is not greater than the valley value of the inductor current (IL). The second comparator 612 may output the second signal of a high level (e.g., "1") if the current value output from the first comparator 611 is greater than the valley value of the inductor current (IL).

According to an embodiment, the comparison circuit 618 may output, to the multiplexers 616 and 617, a third signal (e.g., T1) indicating whether the output voltage (VOUT) is lower than a threshold voltage. For example, the comparison circuit 618 may include a hysteresis comparator 619. The hysteresis comparator 619 may compare a voltage value corresponding to the current value output from the first comparator 611 with a second reference voltage (VREF2) to output the third signal (e.g., T1). For example, the hysteresis comparator 619 may output the third signal (e.g., T1) of a low level (e.g., "0") if the second reference voltage (VREF2) is not greater than the voltage value corresponding to the current value output from the first comparator 611. The hysteresis comparator 619 may output the third signal (e.g., T1) of a high level (e.g., "1") if the second reference voltage (VREF2) is greater than the voltage value corresponding to the current value output from the first comparator 611. That is, the hysteresis comparator 619 may output the third signal (e.g., T1) of the low level when the output voltage (VOUT) is lower than the threshold voltage, and may output the third signal (e.g., T1) of the high level when the output voltage (VOUT) is not lower than the threshold voltage.

For example, a capacitor for converting a current value into a voltage value may be further included between the first comparator 611 and the hysteresis comparator 619. For example, the second reference voltage (VREF2) may be a voltage value for determining whether the output voltage (VOUT) is lower than the threshold voltage.

According to an embodiment, the first flip-flop 614 may, based on the first signal and a clock signal, output first control signals (Q1 and Q1') for controlling two switches (S1 and S2) so that the peak value of the inductor current (IL) is not greater than a current value indicated by a signal output from the first comparator 611. For example, a Q1 signal may be input to a first input terminal 0 of a first multiplexer 616, and a Q1' signal (a signal obtained by inverting the Q1 signal) may be input to a first input terminal 0 of a second multiplexer 617.

According to an embodiment, the second flip-flop 615 may, based on the second signal and the clock signal, output second control signals (Q2 and Q2') for controlling two switches (S1 and S2) so that the valley value of the inductor current (IL) is not less than the current value indicated by the signal output from the first comparator 611. For example, a Q2 signal may be input to a second input terminal 1 of the first multiplexer 616, and a Q2' signal (a signal obtained by inverting the Q2 signal) may be input to a second input terminal 1 of the second multiplexer 617.

According to an embodiment, the multiplexers 616 and 617 may output the first control signals (Q1 and Q1') to the two switches (S1 and S2), or output the second control signals (Q2 and Q2') to the two switches (S1 and S2), based on the third signal (T1). Referring to FIG. 8, the multiplexers 616 and 617 may apply the same output signals (M1 and M2) as the first control signals (Q1 and Q1') to the two switches (S1 and S2) when the third signal (T1) of the low level (e.g., "0") is applied. The multiplexers 616 and 617 may apply the same output signals (M1 and M2) as the second control signals (Q2 and Q2') to the two switches (S1 and S2) when the third signal (T1) of the high level (e.g., "1") is applied.

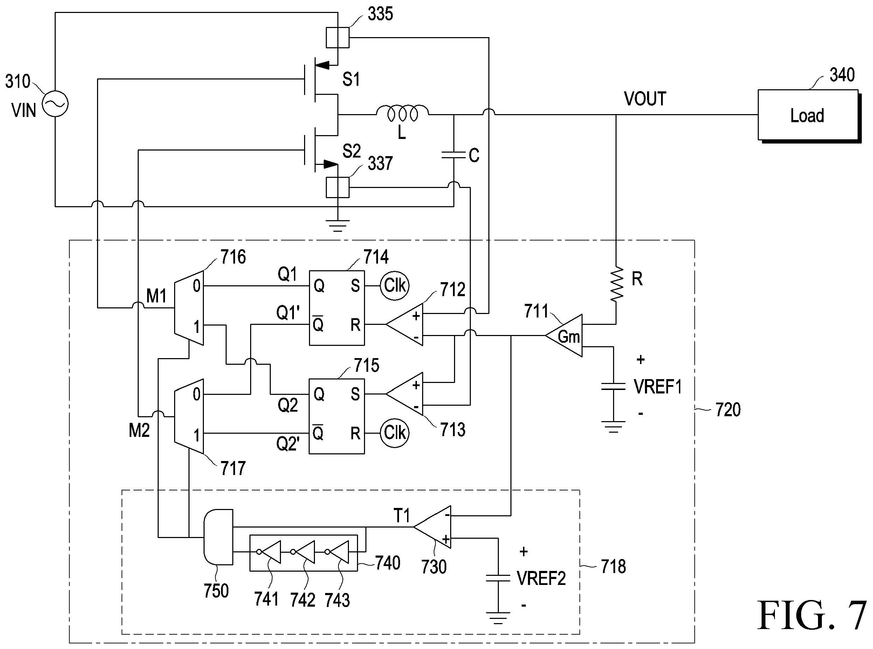

FIG. 7 is a circuit diagram illustrating a buck converter and a control circuit for controlling the same according to an embodiment.

Referring to FIG. 7, a control circuit 720 may perform the same or similar function as the control circuit 320 of FIG. 3. Meanwhile, the configurations of the control circuit 720 described in FIG. 7 are an example for performing the above-described control operation, and the technical idea of the disclosure may not be limited thereto.

According to an embodiment, the control circuit 720 may include a first comparator 711, a second comparator 712, a third comparator 713, a first flip-flop 714, a second flip-flop 715, multiplexers 716 and 717, and a comparison circuit 718. For example, the control circuit 720 may control the comparison circuit 718 and may be implemented to be the same as the control circuit 620 of FIG. 6. For example, the first comparator 711, the second comparator 712, the third comparator 713, the first flip-flop 714, the second flip-flop 715, and the multiplexers 716 and 717 may be implemented to be the same as the first comparator 611, the second comparator 612, the third comparator 613, the first flip-flop 614, the second flip-flop 615, and the multiplexers 616 and 617 described in FIG. 6.

According to an embodiment, the comparison circuit 718 may include a fourth comparator 730, a delay circuit 740, and an AND gate 750. For example, the comparison circuit 718 may output, to the multiplexers 716 and 717, a third signal indicating whether a specified time has elapsed from the time when the control of switches (S1 and S2) is started so that a valley value of an inductor current (IL) is not less than a current value corresponding to a difference between an output voltage (VOUT) and a first reference voltage (VREF 1).

According to an embodiment, the fourth comparator 730 may output a fourth signal, based on a voltage value corresponding to the difference between the output voltage (VOUT) and the first reference voltage (VREF 1) and a second reference voltage (VREF2). For example, if the second reference voltage (VREF2) is lower than the voltage value corresponding to the difference between the first reference voltage (VREF1), the fourth comparator 730 may output the fourth signal of a low level (e.g., "0"). If the second reference voltage (VREF2) is not lower than the voltage value corresponding to the difference between the first reference voltage (VREF1), the fourth comparator 730 may output the fourth signal of a high level (e.g., "1"). That is, if the output voltage (VOUT) is lower than a threshold voltage, the fourth comparator 730 may output the fourth signal (e.g., T1) of the high level (e.g., "1") to the delay circuit 740 and the AND gate 750. Alternatively, if the output voltage (VOUT) is not lower than the threshold voltage, the fourth comparator 730 may output the fourth signal (e.g., T1) of the low level (e.g., "0") to the delay circuit 740 and the AND gate 750.

According to an embodiment, the delay circuit 740 may delay the fourth signal (e.g., T1) for a specified time and then output the inverted fourth signal to the AND gate 750. The delay circuit 740 may include a plurality of inverters 741, 742, and 743. The output of the delay circuit 740 may be delayed as an inverting operation is performed through the plurality of inverters 741, 742, and 743. The number of the plurality of inverters 741, 742, and 743 is exemplary, and the technical idea of the disclosure may not be limited thereto. For example, the number of the plurality of inverters may be determined according to a time for delaying the output of the delay circuit 740.

According to an embodiment, the AND gate 750 may output the third signal to the multiplexers 716 and 717, based on the fourth signal and the inverted fourth signal delayed and output through the delay circuit 750. For example, the AND gate 750 may receive the fourth signal of the low level ("0") from the fourth comparator 730. In this case, the AND gate 750 may output the third signal of a low level ("0") since the AND gate 750 receives a signal of a high level ("1") from the delay circuit 740. Afterwards, if the output voltage (VOUT) momentarily decreases below the threshold voltage, the AND gate 750 may receive the fourth signal (e.g., T1) of the high level (e.g., "1") from the fourth comparator 730. In this case, until the delay circuit 740 outputs a new signal (e.g., a signal of a low level ("0")), the AND gate 750 may output the third signal of a high level ("1") to the multiplexers 716 and 717. Afterwards, if the new signal (e.g., a signal of a low level ("0")) is output from the delay circuit 740, the AND gate 750 may output the third signal of the low level ("0") to the multiplexers 716 and 717.

Through the above-described method, the control circuit 720 may control the switches (S1 and S2) so that the valley value of the inductor current (IL) is not less than the current value corresponding to the difference between the output voltage (VOUT) and the first reference voltage (VREF 1) for a specified time.

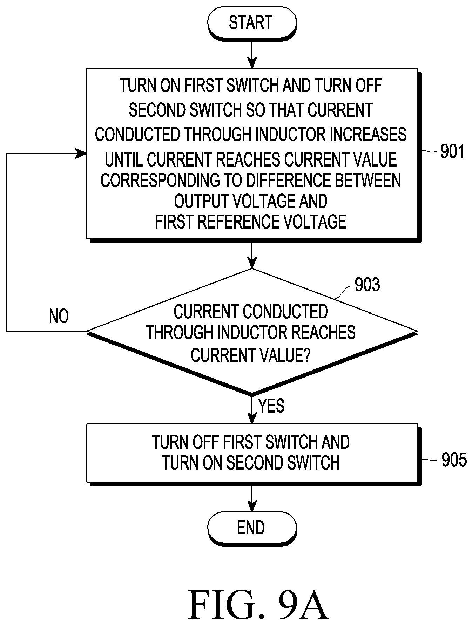

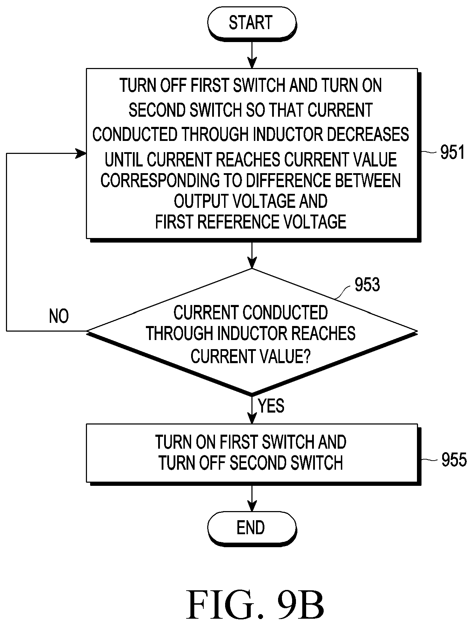

FIGS. 9A and 9B are flowcharts for explaining a method for controlling two switches included in a buck converter by a control circuit according to an embodiment.

FIG. 9A relates to a method for controlling two switches (S1 and S2) included in a buck converter (e.g., the buck converter 330 of FIG. 3A) when a control circuit (e.g., the control circuit 320 of FIG. 3A) limits a peak value of an inductor current (IL) to a specified value or less.

Referring to FIG. 9A, according to an embodiment, in operation 901, the control circuit 320 may turn on the first switch (S1) and turn off the second switch (S2) so that a current (e.g., an inductor current (IL)) conducted through the inductor (L) included in the buck converter 330 increases until the current reaches a current value corresponding to a difference between an output voltage (VOUT) and a first reference voltage (VREF 1), in one switching cycle.

According to an embodiment, in operation 903, the control circuit 320 may identify whether the current (e.g., the inductor current (IL)) conducted through the inductor reaches the current value. For example, if it is identified that the inductor current (IL) has not reached the current value (NO in operation 903), the control circuit 320 may continue to turn on the first switch (S1) and turn off the second switch (S2).

According to an embodiment, if it is identified that the inductor current (IL) has reached the current value (Yes in operation 903), in operation 905, the control circuit 320 may turn off the first switch (S1) and turn on the second switch (S2). In this case, the inductor current (IL) may decrease. Depending on the implementation, the first switch (S1) may be turned on for a shorter time than a clock signal (Clk). When one switching cycle is terminated, the control circuit 320 may perform operation 901 again.

FIG. 9B relates to a method for controlling two switches (S1 and S2) included in a buck converter (e.g., the buck converter 330 of FIG. 3A) when a control circuit (e.g., the control circuit 320 of FIG. 3A) controls a valley value of an inductor current (IL) to be greater than or equal to a specified value.

Referring to FIG. 9B, according to an embodiment, in operation 951, the control circuit 320 may turn off the first switch (S1) and turn on the second switch (S2) so that a current (e.g., an inductor current (IL)) conducted through the inductor (L) included in the buck converter 330 decreases until the current reaches a current value corresponding to a difference between an output voltage (VOUT) and a first reference voltage (VREF1), in one switching cycle. For example, if it is identified that the inductor current (IL) has not reached the current value (NO in operation 953), the control circuit 320 may continue to turn off the first switch (S1) and turn on the second switch (S2).

According to an embodiment, if it is identified that the inductor current (IL) has reached the current value (Yes in operation 953), in operation 955, the control circuit 320 may turn on the first switch (S1) and turn off the second switch (S1). In this case, the inductor current (IL) may increase. Depending on the implementation, the first switch (S1) may be turned on for a longer time than a clock signal (Clk). When one switching cycle is terminated, the control circuit 320 may perform operation 951 again.

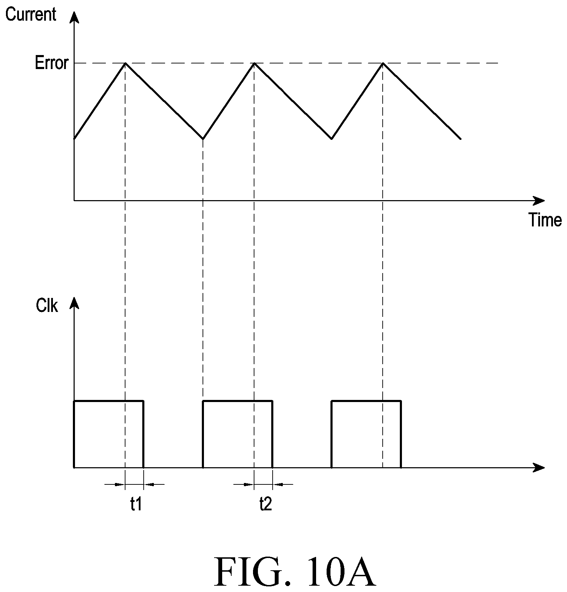

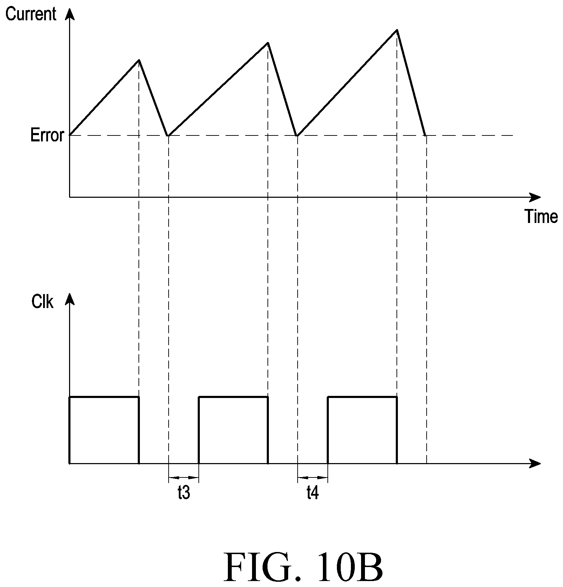

FIGS. 10A and 10B are graphs illustrating a method for controlling two switches included in a buck converter according to an embodiment.

FIG. 10A is a graph illustrating an inductor current (IL) when a control circuit (e.g., the control circuit 320 of FIG. 3A) limits a peak value of the inductor current (IL) to a specified value (Error) or less.

Referring to FIG. 10A, according to an embodiment, in one switching cycle, when a clock signal applied to the first flip-flop 614 or 714 is at a high level, an inductor current may increase. When the inductor current reaches a specified value (Error), even when the clock signal is at the high level in a first time interval (t1), the inductor current may no longer increase but may decrease. For example, the first switch (S1) may be turned on during an interval (e.g., Clk on time - t1) excluding the first time interval (t1) from an interval in which the clock signal is at the high level, in the corresponding switching cycle.

According to an embodiment, in the next switching cycle, similarly, when a clock signal applied to the first flip-flop 614 or 714 is at a high level, an inductor current may increase. In this case, when the inductor current reaches a specified value (Error), even when the clock signal is at the high level in a second time interval (t2), the inductor current may no longer increase but may decrease. For example, the first switch (S1) may be turned on during an interval (e.g., Clk on time - t2) excluding the second time interval (t2) from an interval in which the clock signal is at the high level, in the corresponding switching cycle.

FIG. 10B is a graph illustrating an inductor current (IL) when a control circuit (e.g., the control circuit 320 of FIG. 3A) controls a valley value of the inductor current (IL) to be greater than or equal to a specified value (Error).

Referring to FIG. 10B, according to an embodiment, in one switching cycle, when a clock signal applied to the second flip-flop 615 or 715 is at a low level, an inductor current may decrease. When the inductor current reaches a specified value (Error), even when the clock signal is at the low level in a third time interval (t3), the inductor current may no longer decrease but may increase. For example, the first switch (S1) may be turned on during an interval in which the clock signal is at a high level and the third time interval (t3) (e.g., Clk on time + t3), in the corresponding switching cycle. In this case, the inductor current may not be limited to the specified value or less as shown in FIG. 10A. Accordingly, the inductor current of FIG. 10B may increase more than the inductor current of FIG. 10A.

According to an embodiment, in the next switching cycle, similarly, when a clock signal applied to the second flip-flop 615 or 715 is at a high level, an inductor current may decrease. In this case, when the inductor current reaches a specified value (Error), even when the clock signal is at a low level in a fourth time interval (t4), the inductor current may no longer decrease but may increase. For example, the first switch (S1) may be turned on during an interval in which the clock signal is at the high level and the fourth time interval (t4) (e.g., Clk on time + t4), in the corresponding switching cycle. Similarly, the inductor current may not be limited to the specified value or less as shown in FIG. 10A. Accordingly, the inductor current of FIG. 10B may increase more than the inductor current of FIG. 10A. Meanwhile, the size or shape of the increase in the inductor current of FIG. 10B is merely exemplary, and the technical idea of the disclosure may not be limited thereto.

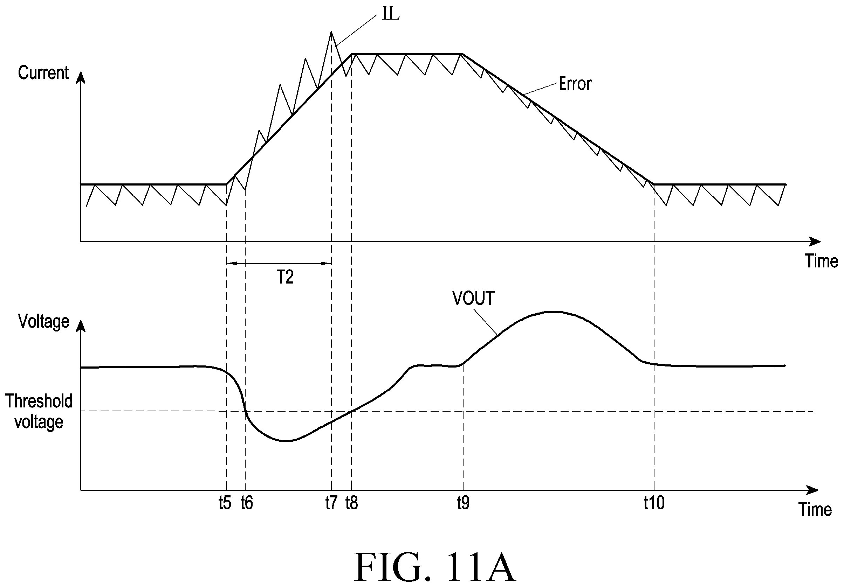

FIG. 11A is a graph illustrating a current conducted through an inductor and an output voltage of a buck converter according to an embodiment.

Referring to FIG. 11A, according to an embodiment, a control circuit (e.g., the control circuit 320 of FIG. 3A or the control circuit 620 of FIG. 6) may control the first switch (S1) and the second switch (S2) included in a buck converter (e.g., the buck converter 330 of FIG. 3A) so that a peak value of an inductor current (IL) conducted through the inductor (L) included in the buck converter 330 is not greater than a current value (Error) corresponding to a difference between an output voltage (VOUT) of the buck converter 330 and a first reference voltage.

According to an embodiment, at a first time point (t5), when a momentary load transient occurs in the electronic device 201, the output voltage (VOUT) of the buck converter 330 may rapidly decrease. In this case, the current value (Error) corresponding to the difference between the output voltage (VOUT) and the first reference voltage may increase.

According to an embodiment, after a second time point (t6), the output voltage (VOUT) may become lower than a threshold voltage. In this case, the control circuit 320 or 620 may start an operation of controlling the first switch (S1) and the second switch (S2) so that a valley value of the inductor current (IL) is not less than the current value (Error) corresponding to the difference between the output voltage (VOUT) and the first reference voltage.

According to an embodiment, in an interval (T2) in which the output voltage (VOUT) of the buck converter 330 decreases to or below the threshold voltage, the control circuit 320 or 620 may control the first switch (S1) and the second switch (S2) so that the valley value of the inductor current (IL) is not less than the current value (Error) corresponding to the difference between the output voltage (VOUT) and the first reference voltage. Depending on the implementation, the control circuit 320 or 620 may control the first switch (S1) and the second switch (S2) so that the valley value of the inductor current (IL) is not less than the current value (Error) corresponding to the difference between the output voltage (VOUT) and the first reference voltage. In the corresponding interval (T2), the inductor current (IL) may increase to exceed the current value (Error) corresponding to the difference between the output voltage (VOUT) and the first reference voltage. For example, more current may be conducted through the inductor (L) than the amount of current conducted through the inductor in FIG. 2B. In addition, more current may be supplied to the buck converter 330. Accordingly, in the interval (T2) in which the output voltage (VOUT) of the buck converter 330 rapidly decreases to or below the threshold voltage, the control circuit 320 may supply more current to the buck converter 330 to quickly increase the output voltage (VOUT).

According to an embodiment, after a third time point (t7), the output voltage (VOUT) may become greater than the threshold voltage. If the output voltage (VOUT) of the buck converter 330 becomes greater than the threshold voltage, the control circuit 320 or 620 may control the first switch (S1) and the second switch (S2) included in the buck converter 330 so that the peak value of the inductor current (IL) conducted through the inductor (L) included in the buck converter 330 is not greater than the current value (Error) corresponding to the difference between the output voltage (VOUT) of the buck converter 330 and the first reference voltage. Accordingly, the control circuit 320 may stably control the buck converter 330.

According to an embodiment, at a fourth time point (t8), the output voltage (VOUT) may maintain a stable value, based on a state change of a load (e.g., load transient). Alternatively, sufficient current may be supplied so that the output voltage may maintain a stable value. In this case, the current value (Error) corresponding to the difference between the output voltage (VOUT) and the first reference voltage may no longer increase.

According to an embodiment, at a fifth time point (t9), when a state change of the load occurs (e.g., a decrease in power consumption), the output voltage (VOUT) may increase. In this case, the current value (Error) corresponding to the difference between the output voltage (VOUT) and the reference voltage may decrease.

According to an embodiment, at a sixth time point (t10), when the output voltage is maintained within a constant voltage range, the current value (Error) corresponding to the difference between the output voltage (VOUT) and the first reference voltage may remain at the same level as before. For example, the output voltage (VOUT) may also remain at the same level as before.

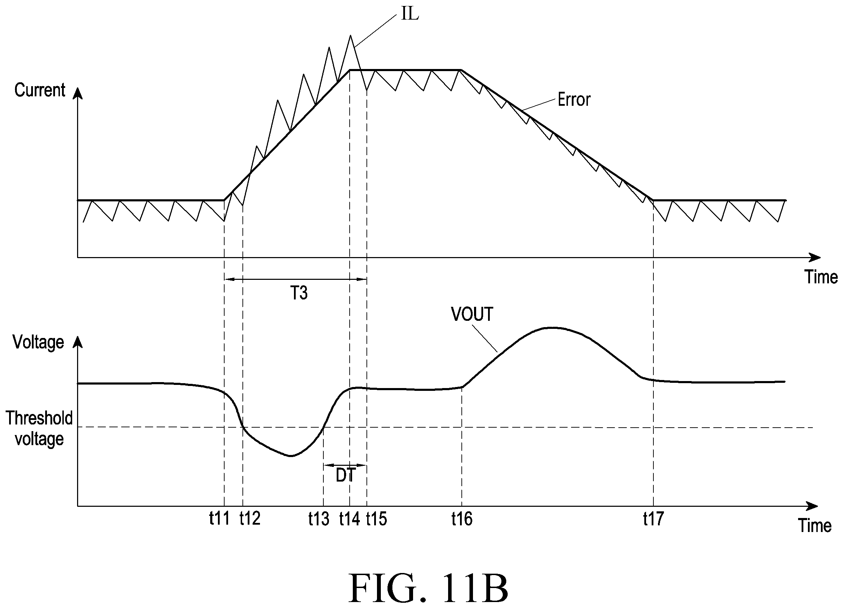

FIG. 11B is a graph illustrating a current conducted through an inductor and an output voltage of a buck converter according to an embodiment.

Referring to FIG. 11B, according to an embodiment, a control circuit (e.g., the control circuit 320 of FIG. 3A or the control circuit 720 of FIG. 7) may control the first switch (S1) and the second switch (S2) included in a buck converter (e.g., the buck converter 330 of FIG. 3A) so that a peak value of an inductor current (IL) conducted through the inductor (L) included in the buck converter 330 is not greater than a current value (Error) corresponding to a difference between an output voltage (VOUT) of the buck converter 330 and a first reference voltage.

According to an embodiment, at a first time point (t11), when a state change of a load (e.g., load transient) occurs in the electronic device 201, the output voltage (VOUT) of the buck converter 330 may rapidly decrease. In this case, the current value (Error) corresponding to the difference between the output voltage (VOUT) and the first reference voltage may increase.

According to an embodiment, after a second time point (t12), the output voltage (VOUT) may become lower than a threshold voltage. In this case, the control circuit 320 or 720 may start an operation of controlling the first switch (S1) and the second switch (S2) so that a valley value of the inductor current (IL) is not less than the current value (Error) corresponding to the difference between the output voltage (VOUT) and the first reference voltage. The control circuit 320 or 720 may perform an operation of controlling the switches (S1 and S2) based on the valley value of the inductor current (IL) for a specified time (T3). For example, during the specified time (T3), the inductor current (IL) may increase to exceed the current value (Error) corresponding to the difference between the output voltage (VOUT) and the first reference voltage. For example, more current may be conducted through the inductor (L) than the amount of current conducted through the inductor in FIG. 2B. In addition, more current may be supplied to the buck converter 330. Accordingly, in an interval (t12 to t13) in which the output voltage (VOUT) of the buck converter 330 rapidly decreases to or below the threshold voltage, the control circuit 320 may supply more current to the buck converter 330 to quickly increase the output voltage (VOUT).

According to an embodiment, after a third time point (t13), the output voltage (VOUT) may become greater than the threshold voltage. However, the control circuit 320 or 720 may continue to perform the operation of controlling the valley value of the inductor current (IL) since the specified time (T3) has not elapsed from the time when the operation of controlling the valley value of the inductor current (IL) is started. For example, the control circuit 320 or 720 may perform the operation of controlling the valley value of the inductor current (IL) for an additional time of "DT" from the third time point (t13). Meanwhile, performing the operation of controlling the valley value of the inductor current (IL) for the additional time of "DT" after the output voltage (VOUT) recovers to the threshold voltage by the specified time is merely exemplary, and the technical idea of the disclosure may not be limited thereto. For example, the specified time may be configured to be almost the same as a time during which the output voltage (VOUT) falls to or below the threshold voltage and then recovers to the threshold voltage again.

According to an embodiment, at a fourth time point (t14), the output voltage (VOUT) may maintain a stable value, based on a state change of a load (e.g., load transient). Alternatively, sufficient current may be supplied so that the output voltage may maintain a stable value. In this case, the current value (Error) corresponding to the difference between the output voltage (VOUT) and the reference voltage may no longer increase.

According to an embodiment, after a fifth time point (t15) when the specified time (T3) has elapsed from the time when the operation of controlling the valley value of the inductor current (IL) is started, the control circuit 320 or 720 may control the first switch (S1) and the second switch (S2) included in the buck converter 330 so that the peak value of the inductor current (IL) conducted through the inductor (L) included in the buck converter 330 is not greater than the current value (Error) corresponding to the difference between the output voltage (VOUT) of the buck converter 330 and the first reference voltage. Accordingly, the control circuit 320 or 720 may stably control the buck converter 330.

According to an embodiment, at a sixth time point (t16), when a change in the load occurs (e.g., a decrease in power consumption), the output voltage (VOUT) may increase. In this case, the current value (Error) corresponding to the difference between the output voltage (VOUT) and the first reference voltage may decrease.

According to an embodiment, at a seventh time point (t17), when the output voltage is maintained within a constant voltage range, the current value (Error) corresponding to the difference between the output voltage (VOUT) and the first reference voltage may remain at the same level as before. For example, the output voltage (VOUT) may also remain at the same level as before.

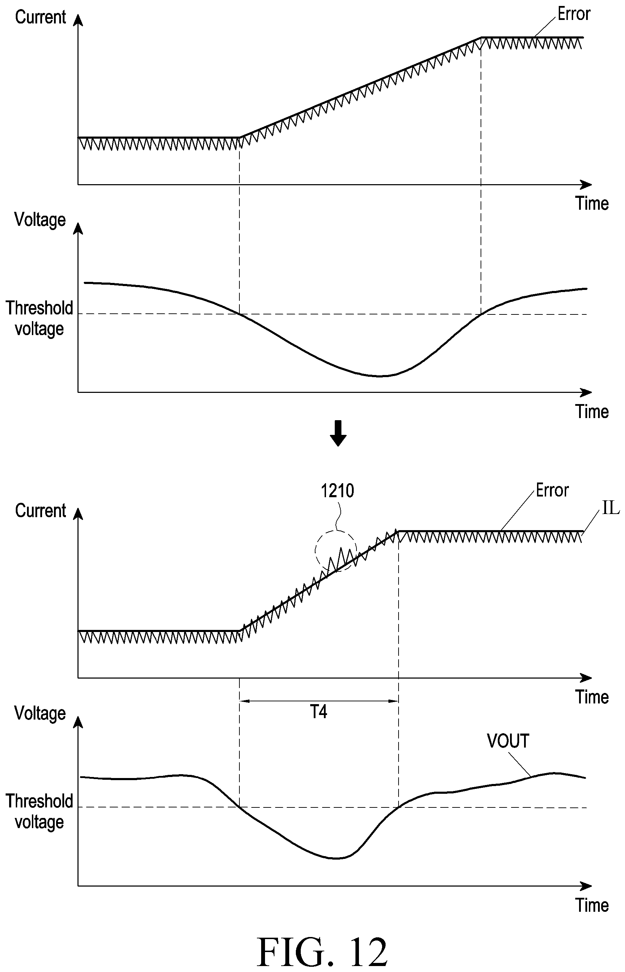

FIG. 12 is a graph illustrating an effect of, when an output voltage of a buck converter decreases, supplying more current to increase the output voltage according to an embodiment.

Referring to FIG. 12, according to an embodiment, in an interval (T4) in which an output voltage (VOUT) of a buck converter (e.g., the buck converter 330 of FIG. 3A) decreases to or below a threshold voltage, a control circuit (e.g., the control circuit 320 of FIG. 3A) may control the first switch (S1) and the second switch (S2) so that a valley value of an inductor current (IL) is not less than a current value (Error) corresponding to a difference between the output voltage (VOUT) and a reference voltage. In the corresponding interval (T4), the inductor current (IL) may increase to exceed the current value (Error) corresponding to the difference between the output voltage (VOUT) and the reference voltage. For example, a current 1210 greater than the current value (Error) corresponding to the difference between the output voltage (VOUT) and the reference voltage may be conducted through the inductor (L). Accordingly, the output voltage (VOUT) of the buck converter 330 may increase more quickly than the previous case (e.g., a graph above the arrow). In addition, the output voltage (VOUT) of the buck converter 330 may increase beyond the threshold voltage more quickly than the previous case (e.g., a graph above the arrow).

According to the above-described method, the electronic device 301 may minimize performance degradation even when a voltage-drop phenomenon occurs in which an output voltage (VOUT) of the buck converter 330 decreases momentarily.

An electronic device 101 according to an embodiment may include a DC/DC converter 330 including an inductor and a first switch (S1) and a second switch (S2) which are connected to each other, and a control circuit 320 operatively connected to the DC/DC converter. One end of the first switch according to an embodiment may be connected to a power source, the other end of the first switch may be connected to one end of the second switch, and the other end of the second switch may be connected to ground. The control circuit according to an embodiment may be configured to identify a peak value of a current conducted through the inductor at the one end of the first switch. The control circuit according to an embodiment may be configured to identify a valley value of the current conducted through the inductor at the other end of the second switch. The control circuit according to an embodiment may be configured to control the first switch and the second switch so that the peak value of the current conducted through the inductor is not greater than a current value corresponding to a difference between an output voltage of the DC/DC converter and a first reference voltage. The control circuit according to an embodiment may be configured to, when identifying that the output voltage of the DC/DC converter is lower than a threshold voltage while controlling the first switch and the second switch so that the peak value of the current conducted through the inductor is not greater than the current value, control the first switch and the second switch so that the valley value of the current conducted through the inductor is not less than the current value.

The control circuit according to an embodiment may be configured to, when identifying that the output voltage of the DC/DC converter is greater than the threshold voltage while controlling the switches so that the valley value of the current conducted through the inductor is not less than the current value, control the first switch and the second switch so that the peak value of the current conducted through the inductor is not greater than the current value.

The control circuit according to an embodiment may be configured to, after controlling the switches for a specified time so that the valley value of the current conducted through the inductor is not less than the current value, control the first switch and the second switch so that the peak value of the current conducted through the inductor is not greater than the current value.

According to an embodiment, the peak value of the current conducted through the inductor may be identified at a point corresponding to a drain of the first switch implemented as a P-type field effect transistor (FET). According to an embodiment, the valley value of the current conducted through the inductor may be identified at a point corresponding to a source of the second switch implemented as an N-type FET.

The control circuit according to an embodiment may be configured to, as at least a part of the controlling of the first switch and the second switch so that the peak value of the current conducted through the inductor is not greater than the current value, control the first switch to be in an on state and control the second switch to be in an off state until the current reaches the current value. The control circuit according to an embodiment may be configured to, as at least a part of the controlling of the first switch and the second switch so that the peak value of the current conducted through the inductor is not greater than the current value, control the first switch to be in the off state and control the second switch to be in the on state after the current reaches the current value.

The control circuit according to an embodiment may be configured to, as at least a part of the controlling of the first switch and the second switch so that the valley value of the current conducted through the inductor is not less than the current value, control the first switch to be in an off state and control the second switch to be in an on state until the current reaches the current value. The control circuit according to an embodiment may be configured to, as at least a part of the controlling of the first switch and the second switch so that the valley value of the current conducted through the inductor is not less than the current value, control the first switch to be in the on state and control the second switch to be in the off state after the current reaches the current value.

The control circuit according to an embodiment may include a first comparator configured to output the current value, based on the difference between the output voltage and the first reference voltage. The control circuit according to an embodiment may include a second comparator configured to output a first signal, based on the peak value of the current and the current value. The control circuit according to an embodiment may include a third comparator configured to output a second signal, based on the valley value of the current and the current value. The control circuit according to an embodiment may include a comparison circuit configured to output a third signal indicating whether the output voltage is lower than the threshold voltage. The control circuit according to an embodiment may include a first flip-flop configured to output first control signals for controlling the first switch and the second switch so that the peak value of the current conducted through the inductor is not greater than the current value, based on the first signal and a clock signal. The control circuit according to an embodiment may include a second flip-flop configured to output second control signals for controlling the first switch and the second switch so that the valley value of the current conducted through the inductor is not less than the current value, based on the second signal and the clock signal. The control circuit according to an embodiment may include a plurality of multiplexers configured to output the first control signals to the first switch and the second switch or output the second control signals to the first switch and the second switch, based on the third signal.

The comparison circuit according to an embodiment may include a hysteresis comparator configured to output the third signal indicating whether the output voltage is lower than the threshold voltage, based on a voltage value corresponding to the current value and a second reference voltage.

The comparison circuit according to an embodiment may include a fourth comparator configured to output a fourth signal indicating whether the output voltage is lower than the threshold voltage, based on a voltage value corresponding to the current value and a second reference voltage. The comparison circuit according to an embodiment may include a delay circuit configured to delay and output the fourth signal inverted through a plurality of inverters. The comparison circuit according to an embodiment may include an AND gate configured to output the third signal, based on the fourth signal and the inverted fourth signal delayed and output through the delay circuit.

The DC/DC converter according to an embodiment may include a buck converter.

A method of operating an electronic device 101 including a DC/DC converter 330 according to an embodiment may include an operation of identifying a peak value of a current conducted through an inductor included in the DC/DC converter at one end of a first switch included in the DC/DC converter. The method of operating the electronic device according to an embodiment may include an operation of identifying a valley value of the current conducted through the inductor at the other end of a second switch included in the DC/DC converter. The one end of the first switch according to an embodiment may be connected to a power source, the other end of the first switch may be connected to one end of the second switch, and the other end of the second switch may be connected to ground. The method of operating the electronic device according to an embodiment may include an operation of controlling the first switch and the second switch so that the peak value of the current conducted through the inductor is not greater than a current value corresponding to a difference between an output voltage of the DC/DC converter and a first reference voltage. The method of operating the electronic device according to an embodiment may include an operation of, when identifying that the output voltage of the DC/DC converter is lower than a threshold voltage while controlling the first switch and the second switch so that the peak value of the current conducted through the inductor is not greater than the current value, controlling the first switch and the second switch so that the valley value of the current conducted through the inductor is not less than the current value.

The method of operating the electronic device according to an embodiment may further include an operation of, when identifying that the output voltage of the DC/DC converter is greater than the threshold voltage while controlling the switches so that the valley value of the current conducted through the inductor is not less than the current value, controlling the first switch and the second switch so that the peak value of the current conducted through the inductor is not greater than the current value.

The method of operating the electronic device according to an embodiment may further include an operation of, after controlling the switches for a specified time so that the valley value of the current conducted through the inductor is not less than the current value, controlling the first switch and the second switch so that the peak value of the current conducted through the inductor is not greater than the current value.

According to an embodiment, the peak value of the current conducted through the inductor may be identified at a point corresponding to a drain of the first switch implemented as a P-type field effect transistor (FET). According to an embodiment, the valley value of the current conducted through the inductor may be identified at a point corresponding to a source of the second switch implemented as an N-type FET.

The operation of controlling the first switch and the second switch so that the peak value of the current conducted through the inductor is not greater than the current value, according to an embodiment, may include an operation of controlling the first switch to be in an on state and controlling the second switch to be in an off state until the current reaches the current value. The operation of controlling the first switch and the second switch so that the peak value of the current conducted through the inductor is not greater than the current value, according to an embodiment, may include an operation of controlling the first switch to be in the off state and controlling the second switch to be in the on state after the current reaches the current value.

The operation of controlling the first switch and the second switch so that the valley value of the current conducted through the inductor is not less than the current value, according to an embodiment, may include an operation of controlling the first switch to be in an off state and controlling the second switch to be in an on state until the current reaches the current value. The operation of controlling the first switch and the second switch so that the valley value of the current conducted through the inductor is not less than the current value, according to an embodiment, may include an operation of controlling the first switch to be in the on state and controlling the second switch to be in the off state after the current reaches the current value.

The method of operating the electronic device according to an embodiment may include an operation of outputting the current value through a first comparator, based on the difference between the output voltage and the first reference voltage. The method of operating the electronic device according to an embodiment may include an operation of outputting a first signal through a second comparator, based on the peak value of the current and the current value. The method of operating the electronic device according to an embodiment may include an operation of outputting a second signal through a third comparator, based on the valley value of the current and the current value. The method of operating the electronic device according to an embodiment may include an operation of outputting, through a comparison circuit, a third signal indicating whether the output voltage is lower than the threshold voltage. The method of operating the electronic device according to an embodiment may include an operation of outputting, through a first flip-flop, first control signals for controlling the first switch and the second switch so that the peak value of the current conducted through the inductor is not greater than the current value, based on the first signal and a clock signal. The method of operating the electronic device according to an embodiment may include an operation of outputting, through a second flip-flop, second control signals for controlling the first switch and the second switch so that the valley value of the current conducted through the inductor is greater than the current value, based on the second signal and the clock signal. The method of operating the electronic device according to an embodiment may include an operation of, through multiplexers, outputting the first control signals to the first switch and the second switch or outputting the second control signals to the first switch and the second switch, based on the third signal.

The operation of outputting the third signal through the comparison circuit according to an embodiment may include an operation of outputting, through a hysteresis comparator, the third signal indicating whether the output voltage is lower than the threshold voltage, based on a voltage value corresponding to the current value and a second reference voltage.

The operation of outputting the third signal through the comparison circuit according to an embodiment may include an operation of outputting, through a fourth comparator, a fourth signal indicating whether the output voltage is lower than the threshold voltage, based on a voltage value corresponding to the current value and a second reference voltage. The operation of outputting the third signal through the comparison circuit according to an embodiment may include an operation of delaying and outputting, through a delay circuit, the fourth signal inverted through a plurality of inverters. The operation of outputting the third signal through the comparison circuit according to an embodiment may include an operation of outputting the third signal through an AND gate, based on the fourth signal and the inverted fourth signal delayed and output through the delay circuit.

The DC/DC converter according to an embodiment may include a buck converter.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a DC/DC converter (330) comprising an inductor and a first switch and a second switch which are connected to each other, wherein one end of the first switch is connected to a power source, the other end of the first switch is connected to one end of the second switch, and the other end of the second switch is connected to a ground; and
a control circuit (320) operatively connected to the DC/DC converter,
wherein the control circuit is configured to:
identify a peak value of a current conducted through the inductor at the one end of the first switch;
identify a valley value of the current conducted through the inductor at the other end of the second switch;
control the first switch and the second switch so that the peak value of the current conducted through the inductor is not greater than a current value corresponding to a difference between an output voltage of the DC/DC converter and a first reference voltage; and
in case of identifying that the output voltage of the DC/DC converter is lower than a threshold voltage while controlling the first switch and the second switch so that the peak value of the current conducted through the inductor is not greater than the current value, control the first switch and the second switch so that the valley value of the current conducted through the inductor is not less than the current value.

2. The electronic device of claim 1, wherein the control circuit is configured to, in case of identifying that the output voltage of the DC/DC converter is greater than the threshold voltage while controlling the switches so that the valley value of the current conducted through the inductor is not less than the current value, control the first switch and the second switch so that the peak value of the current conducted through the inductor is not greater than the current value.

3. The electronic device of one of claims 1 to 2, wherein the control circuit is configured to, after controlling the switches for a specified time so that the valley value of the current conducted through the inductor is not less than the current value, control the first switch and the second switch so that the peak value of the current conducted through the inductor is not greater than the current value.

4. The electronic device of one of claims 1 to 3, wherein the peak value of the current conducted through the inductor is identified at a point corresponding to a drain of the first switch implemented as a P-type field effect transistor (FET), and
the valley value of the current conducted through the inductor is identified at a point corresponding to a source of the second switch implemented as an N-type FET.

5. The electronic device of one of claims 1 to 4, wherein the control circuit is configured to, as at least a part of the controlling of the first switch and the second switch so that the peak value of the current conducted through the inductor is not greater than the current value,
control the first switch to be in an on state and control the second switch to be in an off state until the current reaches the current value, and
control the first switch to be in the off state and control the second switch to be in the on state after the current reaches the current value.

6. The electronic device of one of claims 1 to 5, wherein the control circuit is configured to, as at least a part of the controlling of the first switch and the second switch so that the valley value of the current conducted through the inductor is not less than the current value,
control the first switch to be in an off state and control the second switch to be in an on state until the current reaches the current value, and
control the first switch to be in the on state and control the second switch to be in the off state after the current reaches the current value.

7. The electronic device of one of claims 1 to 6, wherein the control circuit comprises:
a first comparator configured to output the current value, based on the difference between the output voltage and the first reference voltage;
a second comparator configured to output a first signal, based on the peak value of the current and the current value;
a third comparator configured to output a second signal, based on the valley value of the current and the current value;
a comparison circuit configured to output a third signal indicating whether the output voltage is lower than the threshold voltage;
a first flip-flop configured to output first control signals for controlling the first switch and the second switch so that the peak value of the current conducted through the inductor is not greater than the current value, based on the first signal and a clock signal;
a second flip-flop configured to output second control signals for controlling the first switch and the second switch so that the valley value of the current conducted through the inductor is not less than the current value, based on the second signal and the clock signal; and
a plurality of multiplexers configured to output the first control signals to the first switch and the second switch or output the second control signals to the first switch and the second switch, based on the third signal.

8. The electronic device of one of claims 1 to 7, wherein the comparison circuit comprises a hysteresis comparator configured to output the third signal indicating whether the output voltage is lower than the threshold voltage, based on a voltage value corresponding to the current value and a second reference voltage.

9. The electronic device of one of claims 1 to 8, wherein the comparison circuit comprises:
a fourth comparator configured to output a fourth signal indicating whether the output voltage is lower than the threshold voltage, based on a voltage value corresponding to the current value and the second reference voltage;
a delay circuit configured to delay and output the fourth signal inverted through a plurality of inverters; and
an AND gate configured to output the third signal, based on the fourth signal and the inverted fourth signal delayed and output through the delay circuit.

10. The electronic device of one of claims 1 to 9, wherein the DC/DC converter comprises a buck converter.

11. A method of operating an electronic device (101) comprising a DC/DC converter (330), the method comprising:
identifying a peak value of a current conducted through an inductor included in the DC/DC converter at one end of a first switch included in the DC/DC converter;
identifying a valley value of the current conducted through the inductor at the other end of a second switch included in the DC/DC converter, wherein the one end of the first switch is connected to a power source, the other end of the first switch is connected to one end of the second switch, and the other end of the second switch is connected to a ground;
controlling the first switch and the second switch so that the peak value of the current conducted through the inductor is not greater than a current value corresponding to a difference between an output voltage of the DC/DC converter and a first reference voltage; and
in case of identifying that the output voltage of the DC/DC converter is lower than a threshold voltage while controlling the first switch and the second switch so that the peak value of the current conducted through the inductor is not greater than the current value, controlling the first switch and the second switch so that the valley value of the current conducted through the inductor is not less than the current value.

12. The method of claim 11, further comprising, in case of identifying that the output voltage of the DC/DC converter is greater than the threshold voltage while controlling the switches so that the valley value of the current conducted through the inductor is not less than the current value, controlling the first switch and the second switch so that the peak value of the current conducted through the inductor is not greater than the current value.

13. The method of one of claims 11 and 12, further comprising, after controlling the switches for a specified time so that the valley value of the current conducted through the inductor is not less than the current value, controlling the first switch and the second switch so that the peak value of the current conducted through the inductor is not greater than the current value.

14. The method of one of claims 11 to 13, wherein the peak value of the current conducted through the inductor is identified at a point corresponding to a drain of the first switch implemented as a P-type field effect transistor (FET), and
the valley value of the current conducted through the inductor is identified at a point corresponding to a source of the second switch implemented as an N-type FET.

15. The method of one of claims 11 to 14, wherein the controlling of the first switch and the second switch so that the peak value of the current conducted through the inductor is not greater than the current value comprises:
controlling the first switch to be in an on state and controlling the N-type FET to be in an off state until the current reaches the current value; and
controlling the second switch to be in the off state and controlling the N-type FET to be in the on state after the current reaches the current value.
